# EUROPÄISCHE PATENTANMELDUNG

(11) **EP 3 170 609 A1**
(43) Veröffentlichungstag der Anmeldung: **24.05.2017**
(21) Anmeldenummer: 15195403.9
(22) Anmeldetag: 19.11.2015
(51) Int. Cl.: B23K 20/12, B23K 20/16, B23K 20/233, F01D 5/14, F01D 5/18, F01D 5/34, B23K 26/342, B23K 101/00, B23K 103/14, B23K 103/18

(54) **VERFAHREN ZUM HERSTELLEN EINES BESCHAUFELTEN ROTORS FÜR EINE STRÖMUNGSMASCHINE ; ENTSPRECHENDER BESCHAUFELTER ROTOR**

(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die Erfindung betrifft ein Verfahren zum Herstellen eines beschaufelten Rotors für eine Strömungsmaschine, insbesondere für ein Flugtriebwerk. Das Verfahren umfasst dabei die Schritte a) Bereitstellen eines Rotorgrundkörpers des Rotors, b) Bereitstellen wenigstens eines Schaufelfußes, c) Bereitstellen wenigstens eines Schaufelblatts, d) Herstellen wenigstens einer Schaufel, indem das Schaufelblatt über eine Diffusionsbarriereschicht mit dem Schaufelfuß verbunden wird, wobei zumindest das Schaufelblatt, die Diffusionsbarriereschicht und der Schaufelfuß aus jeweils unterschiedlichen Werkstoffen bestehen, und e) Fügen des wenigstens einen Schaufelfußes mit dem Rotorgrundkörper. Die Erfindung betrifft weiterhin einen beschaufelten Rotor sowie eine Strömungsmaschine mit einem solchen beschaufelten Rotor.

## Beschreibung

Die Erfindung betrifft ein Verfahren zum Herstellen eines beschaufelten Rotors für eine Strömungsmaschine, insbesondere für ein Flugtriebwerk. Die Erfindung betrifft weiterhin einen beschaufelten Rotor für eine Strömungsmaschine sowie eine Strömungsmaschine mit einem solchen Rotor.

Aus dem Stand der Technik ist es bekannt, beschaufelte Rotoren durch Fräsen aus dem Vollen herzustellen, was sehr aufwendig und teuer ist, weshalb dieses Verfahren nur für relativ kleine Gasturbinenrotoren Verwendung gefunden hat. Solche Rotoren mit integraler Beschaufelung für Strömungsmaschinen wie Gasturbinen oder Flugtriebwerke bezeichnet man dabei abhängig davon, ob ein im Querschnitt scheibenförmiger oder ein im Querschnitt ringförmiger Rotor bzw. Rotorträger (im folgenden Rotorgrundkörper genannt) vorhanden ist, als Blisk oder Bling. Blisk ist die Kurzform von "bladed disk", während Bling die Kurzform von "bladed ring" ist. Ein anderes, bei großen Rotoren Anwendung findendes Verfahren ist das Reibschweißen. Dabei werden der Rotorgrundkörper und die Schaufeln separat hergestellt und anschließend miteinander reibverschweißt. Mit diesem Verfahren können aber nur ähnliche und vor allem schmelzschweißbare Werkstoffe miteinander gefügt werden. Es ist aber beispielsweise nicht möglich, spröde bzw. nicht-schmelzschweißbare Legierungen als Werkstoff für die Schaufeln zu verwenden. Zum Anbinden von Schaufeln ist es alternativ bekannt, deren Schaufelfüße in entsprechende Steckverbindungen im Rotorgrundkörper einzustecken. Dies ist aber ebenfalls sehr aufwendig und erfordert aufgrund der Duktilitätsforderung an den Schaufelfuß erhebliche Kompromisse im Hinblick auf die Auswahl der Werkstoffe sowie auf die Ausgestaltung des Schaufelblatts der Schaufel.

Aufgabe der vorliegenden Erfindung ist es, ein Verfahren zum Herstellen eines beschaufelten Rotors für eine Strömungsmaschine zu schaffen, welches eine flexiblere Werkstoffauswahl für den Rotorgrundkörper und das Schaufelblatt wenigstens einer Schaufel ermöglicht. Eine weitere Aufgabe ist es, einen beschaufelten Rotor anzugeben, bei welchem die Werkstoffe des Rotorgrundkörpers und zumindest eines Schaufelblatts wenigstens einer Schaufel flexibler auswählbar sind. Eine weitere Aufgabe der Erfindung ist es, eine Strömungsmaschine mit einem solchen beschaufelten Rotor anzugeben.

Die Aufgaben werden erfindungsgemäß durch ein Verfahren mit den Merkmalen des Patentanspruchs 1, einen beschaufelten Rotor gemäß Patentanspruch 12 sowie durch eine Strömungsmaschine gemäß Patentanspruch 13 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Verfahren zum Herstellen eines beschaufelten Rotors für eine Strömungsmaschine, insbesondere für ein Flugtriebwerk. Erfindungsgemäß umfasst das Verfahren die Schritte a) Bereitstellen eines Rotorgrundkörpers des Rotors, b) Bereitstellen wenigstens eines Schaufelfußes, c) Bereitstellen wenigstens eines Schaufelblatts, d) Herstellen wenigstens einer Schaufel, indem das Schaufelblatt über eine Diffusionsbarriereschicht mit dem Schaufelfuß verbunden wird, wobei zumindest das Schaufelblatt, die Diffusionsbarriereschicht und der Schaufelfuß aus jeweils unterschiedlichen Werkstoffen bestehen, und e) Fügen des wenigstens einen Schaufelfußes mit dem Rotorgrundkörper. Mit anderen Worten ist es erfindungsgemäß vorgesehen, dass der beschaufelte Rotor als Werkstoffverbund aus mindestens drei unterschiedlichen Werkstoffen hergestellt wird, indem zunächst eine oder mehrere Schaufeln aus jeweils einem Schaufelfuß, einer vermittelnden Diffusionsbarriereschicht und einem Schaufelblatt hergestellt wird bzw. werden, wobei der Schaufelfuß, die Diffusionsbarriereschicht und das Schaufelblatt jeder Schaufel aus jeweils unterschiedlichen Werkstoffen bestehen. Anschließend wird der Schaufelfuß dieser Schaufel mit dem Rotorgrundkörper gefügt. Dies ermöglicht eine besonders hohe Flexibilität bei der Auswahl der Werkstoffe für den Rotorgrundkörper bzw. den Schaufelfuß und das Schaufelblatt, da das Schaufelblatt nicht nur aus einer duktilen, sondern auch aus einer spröden Legierung gefertigt und bezüglich seiner Kriecheigenschaften optimiert werden kann, was bislang aufgrund der Duktilitätsmindestforderungen nicht realisierbar war. Die Diffusionsbarriereschicht stellt dabei sicher, dass zwischen dem Schaufelblatt und der Diffusionsbarriere- oder Diffusionssperrschicht gegebenenfalls entstehende intermetallische Phasen keinen oder zumindest keinen wesentlichen Einfluss auf die Duktilität der gesamten Schaufel ausüben. Darüber hinaus kann die Diffusionsbarriereschicht an beliebige Werkstoffkombinationen von Schaufelfuß bzw. Rotorgrundkörper und Schaufelblatt optimiert werden, ohne dass sich die chemischen Zusammensetzungen und mechanischen Eigenschaften des Schaufelfußes bzw. des Rotorgrundkörpers und des Schaufelblatts gegenseitig beeinflussen oder verändern. Dementsprechend können in allen Teilen, das heißt im Rotorgrundkörper, im Schaufelfuß, in der Diffusionsbarriereschicht und im Schaufelblatt jeweils unterschiedliche Mikrostrukturen eingestellt werden. Der Rotor kann damit besonders flexibel und für den jeweiligen Einsatzzweck optimiert hergestellt werden. Dem Fachmann ist dabei bewusst, dass die Abfolge der Schritte a) bis e) nicht zwingend in der beschriebenen Reihenfolge durchgeführt werden muss, sondern dass auch alternative Schrittabfolgen, beispielsweise c), b), a), d) und e) möglich sind.

In einer vorteilhaften Ausgestaltung der Erfindung wird in Schritt a) ein Rotorgrundkörper aus einer Nickelbasislegierung, insbesondere aus DA 718, IN 718, AD 730, Waspaloy oder Udimet 720, und/oder aus einer Titanlegierung, insbesondere aus Ti64, Ti6242, Ti6246 oder Ti834, bereitgestellt, die hervorragende Eigenschaften zur Verwendung als Scheiben- oder Ringwerkstoff aufweisen. Unter einer Nickelbasislegierung wird jede insbesondere hochtemperaturfeste Legierung verstanden, die Nickel als Hauptbestandteil enthält. Dementsprechend wird unter einer Titanlegierung jede Legierung verstanden, die Titan als Hauptbestandteil enthält.

In einer weiteren vorteilhaften Ausgestaltung der Erfindung wird in Schritt b) ein Schaufelfuß bereitgestellt, welcher zumindest im Bereich seiner Oberfläche aus dem gleichen oder einem gleichartigen Werkstoff wie der Rotorgrundkörper besteht. Unter einem gleichartigen Werkstoff werden dabei Werkstoffe verstanden, die grundsätzlich gegeneinander austauschbar und in gleicher Weise verarbeitbar sind. Wenn der Rotorgrundkörper beispielsweise aus einer Nickelbasislegierung wie DA 718 besteht, kann der Schaufelfuß ebenfalls aus DA 718 oder aus IN 718, AD 730, Waspaloy oder Udimet 720 bestehen bzw. zumindest eine Oberfläche aus den genannten Werkstoffen besitzen. Entsprechendes gilt für andere Legierungen. Vorzugsweise umfassen dabei sowohl der Schaufelfuß als auch der Rotorgrundkörper miteinander verschweißbare Werkstoffe, so dass vorteilhaft auf eine komplexe Steckverbindung verzichtet werden kann. Es kann vorgesehen sein, dass der Schaufelfuß vollständig aus dem gleichen oder einem vergleichbaren Werkstoff besteht wie der Rotorgrundkörper. Alternativ kann vorgesehen sein, dass der gleiche oder der vergleichbare Werkstoff, aus dem der Rotorgrundkörper besteht, additiv oder durch Reibschweißen auf den Schaufelfuß aufgebracht wird, dessen Kern dementsprechend aus einem abweichenden Werkstoff bestehen kann. Alternativ oder zusätzlich ist es vorgesehen, dass die Oberseite des Schaufelfußes im belastungsärmsten Bereich der späteren Schaufel angeordnet ist. Mit anderen Worten ist es vorgesehen, dass die Verbindungszone zwischen dem Schaufelblatt und dem Schaufelfuß im Bereich der größten Querschnittsfläche der Schaufel vorgesehen ist, da hier die geringsten lokalen Spannungen auftreten und eine entsprechend hohe Festigkeit sichergestellt ist. Dementsprechend wird auch die Diffusionsbarriereschicht in demjenigen Bereich der Schaufel angeordnet, der in der Schaufel bzw. während des Betriebs des beschaufelten Rotors den geringsten Beanspruchungen unterworfen ist. Dies erlaubt eine besonders hohe Flexibilität bei der Werkstoffauswahl für den Rotorgrundkörper und das Schaufelblatt, da auch das etwaige Entstehen intermetallischer Phasen im Bereich der Diffusionsbarriereschicht keine oder keine wesentlichen Auswirkungen auf die Eigenschaften der gesamten Schaufel ausübt.

In einer weiteren vorteilhaften Ausgestaltung der Erfindung ist es vorgesehen, dass der Schaufelfuß in Schritt e) stoffschlüssig mit dem Rotorgrundkörper gefügt, insbesondere mit dem Rotorgrundkörper verschweißt wird. Hierdurch werden der Rotorgrundkörper und der Schaufelfuß mechanisch besonders belastbar gefügt.

In einer weiteren vorteilhaften Ausgestaltung der Erfindung ist es vorgesehen, dass das Schaufelblatt in Schritt c) additiv auf der Diffusionsbarriereschicht aufgebaut wird und/oder dass die Diffusionsbarriereschicht vor Schritt d) additiv auf dem Schaufelfuß aufgebaut und/oder durch Reibschweißen mit dem Schaufelfuß verbunden wird. Als additive Herstellungsverfahren eignen sich insbesondere selektives Laserschmelzen, selektives Lasersintern, Elektronenstrahlschmelzen und/oder Laserauftragschweißen. Diese additiven oder generativen Herstellungsverfahren ermöglicht einerseits eine hohe Freiheit bezüglich der Auswahl des oder der Werkstoffe, andererseits bieten sie auch eine große Freiheit bei der geometrischen Gestaltung, so dass auch komplex geformte Oberflächen und Innenstrukturen des Schaufelblatts aufgebaut werden können. Ebenso kann auch ein geometrisch komplex gestalteter Schaufelfuß einfach und präzise mit der Diffusionsbarriereschicht versehen werden. Weiterhin kann es vorgesehen sein, dass die Diffusionsbarriereschicht durch Reibschweißen mit dem Schaufelfuß verbunden wird. Die Verbindungsbildung beim Reibschweißen findet im Wesentlichen durch Diffusionsprozesse in den Grenzflächen zwischen den beiden Reibpartnern statt. Die Schweißwärme wird über Reibung an den Fügeflächen erzeugt. Durch den intensiven Kontakt der Fügeteile während des Schweißprozesses ist das Verbinden von Werkstoffen mit sehr unterschiedlichen Schmelzpunkten und Gitterstrukturen möglich, wobei eine sehr hohe Festigkeit bei vergleichsweise geringerem Wärmeeintrag gegenüber Schmelzschweißverfahren erreicht wird.

Insbesondere wenn der Rotorgrundkörper, der Schaufelfuß und/oder das Schaufelblatt aus einer TiAl-Legierung besteht bzw. bestehen oder eine solche Legierung umfassen, hat es sich weiterhin als vorteilhaft gezeigt, wenn die Diffusionsbarriereschicht aus einem mit einer TiAl-Legierung kompatiblen Werkstoff, insbesondere aus einer CoTiAl-Legierung erzeugt wird.

Weitere Vorteile ergeben sich, indem die Diffusionsbarriereschicht in Schritt d) mit einer Schichtstärke von mindestens 1 mm und/oder mit einer Schichtstärke von höchstens 50 mm erzeugt wird. Obwohl grundsätzlich auch geringere Dicken bzw. Schichtstärken im Bereich von 15 bis 150 µm denkbar sind, haben sich Schichtstärken von mindestens 1 mm als vorteil-haft gezeigt, um eine betriebssichere Trennung der unterschiedlichen Werkstoffe zu gewährleisten. Beispielsweise können mittlere Schichtstärken im Bereich vom 1,0 mm, 1,5 mm, 2,0 mm, 2,5 mm, 3,0 mm, 3,5 mm, 4,0 mm, 4,5 mm, 5,0 mm, 5,5 mm, 6,0 mm, 6,5 mm, 7,0 mm, 7,5 mm, 8,0 mm, 8,5 mm, 9,0 mm, 9,5 mm, 10,0 mm oder mehr vorgesehen sein. Alternativ oder zusätzlich kann vorgesehen sein, dass die Schichtstärke höchstens 50 mm, also beispielsweise 50 mm, 49 mm, 48 mm, 47 mm, 46 mm, 45 mm, 44 mm, 43 mm, 42 mm, 41 mm, 40 mm, 39 mm, 38 mm, 37 mm, 36 mm, 35 mm, 34 mm, 33 mm, 32 mm, 31 mm, 30 mm, 29 mm, 28 mm, 27 mm, 26 mm, 25 mm, 24 mm, 23 mm, 22 mm, 21 mm, 20 mm, 19 mm, 18 mm, 17 mm, 16 mm, 15 mm, 14 mm, 13 mm, 12 mm, 11 mm, 10 mm oder weniger beträgt, um eine ausreichend feste Verbindung zwischen Schaufelfuß und Schaufelblatt sicherzustellen.

In einer weiteren vorteilhaften Ausgestaltung der Erfindung ist es vorgesehen, dass das Schaufelblatt in Schritt c) zusammen mit einem Fußband bereitgestellt wird. Beispielsweise kann hierzu zunächst ein Fußband und anschließend das Schaufelblatt aufgebaut werden. Umgekehrt kann auch zunächst das Schaufelblatt und anschließend das Fußband aufgebaut werden. Hierdurch kann der fertige Rotor mit einem radial inneren Deckband versehen werden. Grundsätzlich kann es auch vorgesehen sein, dass das Schaufelblatt ein radial äußeres Deckband aufweist bzw. mit einem solchen ausgebildet wird.

In einer weiteren vorteilhaften Ausgestaltung der Erfindung ist es vorgesehen, dass in Schritt c) ein Schaufelblatt aus einer TiAl-Legierung, insbesondere einer TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt wird. Mit anderen Worten wird zum Aufbauen oder Herstellen zumindest des Schaufelblatts eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, verwendet. Somit können hochtemperaturstabile Legierungen für das Schaufelblatt verwendet werden, ohne die Duktilitätsforderungen für den mechanisch verbundenen Schaufelfuß erfüllen zu müssen.

In einer weiteren vorteilhaften Ausgestaltung der Erfindung ist vorgesehen, dass zumindest das Schaufelblatt in Schritt c) mittels eines additiven Herstellungsverfahrens, insbesondere durch selektives Laserschmelzen (SLM), selektives Lasersintern, Elektronenstrahlschmelzen (EBM) und/oder Laserauftragschweißen (LMD), und/oder durch Reibschweißen und/oder durch heißisostatisches Pressen einer mit einem Werkstoffpulver befüllten Kapsel aufgebaut wird. So kann das Schaufelblatt beispielsweise mittels EBM und/oder SLM unter Vakuum im Pulverbett direkt auf der Diffusionsbarriereschicht aufgebaut werden. Alternativ oder zusätzlich kann eine Kapsel konventionell durch Aufschweißen angebracht, mit Pulver gefüllt, evakuiert, ausgeheizt, verschweißt und heißisostatisch gepresst (geHIPt) werden. Ebenso kann vorgesehen sein, dass eine Kapsel "in situ" in einer additiven Fertigungsanlage auf der Diffusionsbarriereschicht aufgebaut, mit Werkstoffpulver gefüllt und heißisostatisch gepresst (geHIPt) wird. Des Weiteren kann das Schaufelblatt als Hohlschaufel hergestellt und gegebenenfalls im bereits wärmebehandelten Zustand mit der diffusionsträgen Diffusionsbarriereschicht durch Reibschweißen verbunden werden. Dabei werden dünne definierte Übergangszonen erreicht, die durch entsprechende geometrische Auswahl vorzugsweise dort positioniert werden, wo die endbearbeitete Schaufel die geringsten Belastungen bzw. die größte Querschnittsfläche aufweist. Damit sind zwischen im Bereich der Diffusionssperrschicht eventuell entstehende intermetallische Phasen unkritisch im Hinblick auf ihre geringe Duktilität.

Weitere Vorteile ergeben sich, indem der Rotorgrundkörper und/oder der Schaufelfuß und/oder die Diffusionsbarriereschicht und/oder das Schaufelblatt vor und/oder während und/oder nach Schritt e) einzeln oder in beliebiger Kombination wärmebehandelt wird bzw. werden. Dies erlaubt eine besonders flexible Einstellung der mechanischen und chemischen Eigenschaften in Abhängigkeit von den jeweiligen Materialpaarungen. Unter einer Wärmebehandlung wird im Rahmen der vorliegenden Erfindung ein Verfahren verstanden, bei welchem das betreffende Werkstück mindestens einmal über die Raumtemperatur erwärmt und mindestens einmal wieder auf Raumtemperatur abgekühlt wird. Ebenso ist es möglich, die Ausscheidungen im Schaufelblatt durch Auslagerungsglühungen im entsprechenden Temperaturbereich durchzuführen, bevor dieses mit der Diffusionsbarriereschicht verbunden wird. Eine Wärmebehandlungen des Multilayer-Verbundes Rotorgrundkörper-Schaufelfuß-Diffusionsbarriereschicht-(ev. Fußband)-Schaufelblatt erfordert eine werkstoffliche Abstimmung der Umwandlungstemperaturen in den einzelnen Werkstoffgruppen, um den Verbund (Schaufel mit Schicht und Block) in einer gemeinsamen Ofenglühung wärmebehandeln zu können. Bei der Verwendung von TiAl-Legierungen ist dies beispielsweise durch Wahl des Al-Anteiles möglich. Der Temperaturbereich sollte in diesem Fall grundsätzlich so gewählt werden, dass eine homogene Korngrößenverteilung eingestellt wird, welche eine optimale Kriechfestigkeit im Schaufelblatt und Festigkeit im unteren Schichtbereich bzw. am Übergang zum Rotorgrundkörper sicherstellt.

Ein zweiter Aspekt der Erfindung betrifft einen beschaufelten Rotor für eine Strömungsmaschine, insbesondere für ein Flugtriebwerk, umfassend einen Rotorgrundkörper und wenigstens eine mit dem Rotorgrundkörper verbundene Schaufel, wobei die Schaufel in radialer Richtung zumindest einen mit dem Rotorgrundkörper gefügten Schaufelfuß, eine Diffusionsbarriereschicht und ein Schaufelblatt umfasst, wobei zumindest das Schaufelblatt, die Diffusionsbarriereschicht und der Rotorgrundkörper aus jeweils unterschiedlichen Werkstoffen bestehen. Dies ermöglicht eine flexiblere Auswahl der Werkstoffe des Rotorgrundkörpers und zumindest des Schaufelblatts wenigstens einer Schaufel, so dass beispielsweise auch spröde Werkstoffe für das Schaufelblatt vorgesehen sein können. Vorzugsweise sind mehrere oder alle mit dem Rotorgrundkörper verbundene Schaufeln in dieser Weise ausgebildet. Weitere Merkmale und deren Vorteile sind den Beschreibungen des ersten Erfindungsaspekts zu entnehmen, wobei vorteilhafte Ausgestaltungen der ersten Erfindungsaspekts als vorteilhafte Ausgestaltungen des zweiten Erfindungsaspekts und umgekehrt anzusehen sind. Vorzugsweise ist der beschaufelte Rotor durch ein Verfahren gemäß dem ersten Erfindungsaspekt erhältlich und/oder erhalten.

Ein dritter Aspekt der Erfindung betrifft eine Strömungsmaschine, insbesondere ein Flugtriebwerk, welche wenigstens einen beschaufelten Rotor umfasst, welcher durch ein Verfahren gemäß dem ersten Erfindungsaspekt erhältlich und/oder erhalten ist und/oder gemäß dem zweiten Erfindungsaspekt ausgebildet ist. Dies ermöglicht eine flexiblere Auswahl der Werkstoffe des Rotorgrundkörpers und zumindest des Schaufelblatts wenigstens einer Schaufel, so dass beispielsweise auch spröde Werkstoffe für das Schaufelblatt vorgesehen sein können. Die sich hieraus ergebenden Merkmale und deren Vorteile sind den Beschreibungen des ersten und des zweiten Erfindungsaspekts zu entnehmen, wobei vorteilhafte Ausgestaltungen der ersten und des zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine beschriebenen Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Verbindung spröder Schaufeln mit einem Rotorgrundkörper, der beispielsweise als Scheibe ausgebildete sein kann, über eine mechanische Verbindungstechnik weist viele Probleme in der Auslegung und Lebensdauer dieser Verbindung auf. Um dieses Problem der mechanischen Verbindung zu umgehen, sollen beispielsweise Schaufeln aus einer TiAl-Legierung durch Schweißen mit einer aus einer Nickelbasislegierung bestehenden Scheibe verbunden werden. Um die chemische Zusammensetzung und Eigenschaften der Scheibe nicht negativ zu beeinflussen, können TiAI-Legierungen aber nicht direkt auf die Scheibe aufgeschweißt werden. Daher wird erfindungsgemäß eine Diffusionsbarriereschicht als Zwischenschicht verwendet, die eine Diffusionsbarriere zur Scheibe darstellt und ein Eindiffundieren beispielsweise von TiAl- oder Zwischenschicht-Legierungselementen in die Scheibe verhindert. Dabei wird die Schaufel beispielsweise direkt unter dem Fußband, das heißt am größten Querschnitt der Schaufel, mit einer TiAl verträglichen, diffusionsträgen Schicht, die wenige Millimeter dick ist, versehen. Diese Diffusionsbarriereschicht kann beispielsweise auf einer CoTiAl-Legierung basieren oder aus einer solchen Legierung bestehen.

Mit dieser Diffusionsbarriereschicht, die als Verbindungsschicht zum Ni-Basiswerkstoff der Rotorscheibe bzw. des Rotorgrundkörpers und des Schaufelfußes wirkt, wird ein dickerer Block oder Schaufelfuß verbunden, der zumindest oberflächlich aus dem gleichen oder einem vergleichbaren Material wie der Rotorgrundkörper besteht. Hierzu kann beispielsweise scheibeneigenes oder -vergleichbares Material durch additive Fertigung oder durch Reibschweißen auf den Schaufelfuß aufgebracht werden. Alternativ kann der gesamte Schaufelfuß aus dem gleichen oder vergleichbaren Werkstoff wie die Rotorscheibe hergestellt werden. Aufgrund der gleichen oder vergleichbaren Werkstoffe kommt es damit beim Verschweißen zu keinen nachteiligen chemischen Änderungen in der Rotorscheibe. Im Unterschied zum Stand der Technik muss damit auch kein spröder Schaufelfuß mittels Steckverbindung in der Rotorscheibe verankert werden, so dass etwaige Probleme im Hinblick auf die geforderte Duktilität des Schaufelfußes vermieden werden. Der Block bzw. Schaufelfuß und der Rotorgrundkörper können beispielsweise beide aus DA 718, IN 718 oder AD 730 bestehen. Ebenso kann eine Titanlegierung, beispielsweise Ti64, Ti6242, Ti6246 oder Ti834 vorgesehen sein.

Der Block oder Schaufelboden, der zumindest einen Teil des Schaufelfußes der Schaufel bildet, besitzt eine entsprechende Geometrie, um ihn in eine korrespondierende Aufnahme des Rotorgrundkörpers bzw. der Scheibe einsetzen und einschweißen zu können. Vorzugsweise werden die unterschiedlichen Eigenschaften in den definierten Verbindungszonen berücksichtigt und durch entsprechende geometrische Gestaltung unkritisch gehalten werden. Der Schaufelfuß kann beispielsweise im Querschnitt trapezförmig oder dreieckig sein und in eine korrespondierende Aufnahme im Rotorgrundskörper eingesetzt und eingeschweißt werden.

Das Schaufelblatt der Schaufel kann beispielsweise additiv auf der Diffusionsbarriereschicht aufgebaut werden. Das Schaufelblatt kann dadurch bezüglich seiner Eigenschaften, z. B. seiner Kriecheigenschaften optimiert werden, was bei herkömmlichen Schaufeln aufgrund der nicht erfüllbaren Duktilitätsforderung an den Schaufelfuß nicht möglich wäre. Zur Herstellung des Schaufelblatts können damit TiAl-Legierungen mit gegebenenfalls hohen Anteilen an einem oder mehreren Elementen aus der Gruppe W, Mo, Nb, Co, Hf, Y, Zr, Er, Gd, Si oder C verwendet werden, ohne die Duktilitätsforderungen für mechanisch verbundene Schaufelfüße erfüllen zu müssen. Durch eine entsprechende Wärmebehandlung der Einzelteile vor dem Verbinden können in allen Komponenten (Schaufelblatt, Diffusionsbarriereschicht, Schaufelfuß, Scheibe) unterschiedliche Mikrostrukturen eingestellt werden, welche die jeweils geforderten Anforderungen erfüllen.

Alternativ ist es möglich, auf die Oberseite des Schaufelbodens oder -fußes mittels eines additiven Verfahrens (z. B. SLM, EBM oder LMD) oder durch Reibschweißen eine mit TiAl vertägliche, diffusionsträge Schicht, die wenige Millimeter dick ist, beispielsweise aus einer CoTiAl-haltigen Legierung aufzubringen. Auf diese Diffusionsbarriereschicht, die vorzugsweise am belastungsärmsten Querschnitt der Schaufel im unteren Bodenband angeordnet bzw. ausgebildet wird, kann anschließend mit verschiedenen Verfahren das TiAI-Schaufelblatt aufgebaut werden. So kann beispielsweise mittels EBM/SLM unter Vakuum im Pulverbett das Schaufelblatt direkt auf der Diffusionsbarriereschicht aufgebaut werden. Auch kann eine Kapsel durch Aufschweißen angebracht werden, mit Pulver gefüllt, evakuiert, ausgeheizt, verschweißt und geHIPt werden. Ebenso kann eine Kapsel in situ in einer EBM- oder SLM-Anlage auf der Diffusionsbarriereschicht aufgebaut, mit Pulver gefüllt, geHIPt und entsprechend wärmebehandelt werden. Des Weiteren kann ein als TiAI-Hohlschaufel hergestelltes und bereits wärmebehandeltes Schaufelblatt mit der diffusionsträgen Diffusionsbarriereschicht durch Reibschweißen verbunden werden. Dabei werden dünne definierte Übergangszonen erreicht, die durch entsprechende geometrische Auswahl dort positioniert werden können, wo die endbearbeitete Schaufel die geringsten Belastungen während des Betriebs des Rotors aufweist. Damit sind zwischen der TiAl-Legierung und der Diffusionssperrschicht entstehende intermetallische Phasen unkritisch bezüglich ihrer geringen Duktilität.

Eine erfolgreiche Wärmebehandlungen des gesamten Multilayer-Verbundes, sofern dies nicht bereits vor dem Fügen bzw. Aufbauen der einzelnen Komponeten erfolgt ist, erfordert eine werkstoffliche Abstimmung der Umwandlungstemperaturen in den einzelnen Werkstoffgruppen (bei TiAl z. B. durch Wahl des Al-Anteiles möglich), um den Verbund (Schaufel mit Diffusionsbarriereschicht und Block bzw. Schaufelfuß) in einer gemeinsamen Ofenglühung wärmebehandeln zu können. Der Temperaturbereich sollte in diesem Fall so gewählt werden, dass eine homogene Korngrößenverteilung eingestellt wird, welche einerseits eine optimale Kriechfestigkeit im Schaufelblatt und andererseits eine hohe Festigkeit im unteren Schichtbereich am Übergang zur Scheibe sicherstellt.

Die Ausscheidungen im Schaufelblatt können grundsätzlich auch durch Auslagerungsglühungen im entsprechenden Temperaturbereich durchgeführt werden, nachdem der Gesamtverbund wärmebehandelt wurde.

## Patentansprüche

1. Verfahren zum Herstellen eines beschaufelten Rotors für eine Strömungsmaschine, insbesondere für ein Flugtriebwerk, umfassend die Schritte:
a) Bereitstellen eines Rotorgrundkörpers des Rotors;
b) Bereitstellen wenigstens eines Schaufelfußes;
c) Bereitstellen wenigstens eines Schaufelblatts;
d) Herstellen wenigstens einer Schaufel, indem das Schaufelblatt über eine Diffusionsbarriereschicht mit dem Schaufelfuß verbunden wird, wobei zumindest das Schaufelblatt, die Diffusionsbarriereschicht und der Schaufelfuß aus jeweils unterschiedlichen Werkstoffen bestehen; und
e) Fügen des wenigstens einen Schaufelfußes mit dem Rotorgrundkörper.

2. Verfahren nach Anspruch 1,
**dadurch gekennzeichnet, dass**
in Schritt a) ein Rotorgrundkörper aus einer Nickelbasislegierung, insbesondere aus DA 718, IN 718, AD 730, Waspaloy oder Udimet 720, und/oder aus einer Titanlegierung, insbesondere aus Ti64, Ti6242, Ti6246 oder Ti834, bereitgestellt wird.

3. Verfahren nach Anspruch 1 oder 2,
**dadurch gekennzeichnet, dass**
in Schritt b) ein Schaufelfuß bereitgestellt wird, welcher zumindest im Bereich seiner Oberfläche aus dem gleichen oder einem gleichartigen Werkstoff wie der Rotorgrundkörper besteht, und/oder dessen Oberseite im belastungsärmsten Bereich der Schaufel angeordnet wird.

4. Verfahren nach einem der Ansprüche 1 bis 3,
**dadurch gekennzeichnet, dass**
der Schaufelfuß in Schritt e) stoffschlüssig mit dem Rotorgrundkörper gefügt, insbesondere mit dem Rotorgrundkörper verschweißt wird.

5. Verfahren nach einem der Ansprüche 1 bis 4,
**dadurch gekennzeichnet, dass**
das Schaufelblatt in Schritt c) additiv auf der Diffusionsbarriereschicht aufgebaut wird und/oder dass die Diffusionsbarriereschicht vor Schritt d) additiv auf dem Schaufelfuß aufgebaut und/oder durch Reibschweißen mit dem Schaufelfuß verbunden wird.

6. Verfahren nach einem der Ansprüche 1 bis 5,
**dadurch gekennzeichnet, dass**
die Diffusionsbarriereschicht aus einem mit einer TiAl-Legierung kompatiblen Werkstoff, insbesondere aus einer CoTiAl-Legierung erzeugt wird.

7. Verfahren nach einem der Ansprüche 1 bis 6,
**dadurch gekennzeichnet, dass**
die Diffusionsbarriereschicht mit einer Schichtstärke von mindestens 1 mm und/oder mit einer Schichtstärke von höchstens 50 mm erzeugt wird.

8. Verfahren nach einem der Ansprüche 1 bis 7,
**dadurch gekennzeichnet, dass**
das Schaufelblatt in Schritt c) zusammen mit einem Fußband bereitgestellt wird.

9. Verfahren nach einem der Ansprüche 1 bis 8,
**dadurch gekennzeichnet, dass**
in Schritt c) ein Schaufelblatt aus einer TiAl-Legierung, insbesondere einer TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt wird.

10. Verfahren nach einem der Ansprüche 1 bis 9,
**dadurch gekennzeichnet, dass**
zumindest das Schaufelblatt in Schritt c) mittels eines additiven Herstellungsverfahrens, insbesondere durch selektives Laserschmelzen, selektives Lasersintern, Elektronenstrahlschmelzen und/oder Laserauftragschweißen, und/oder durch Reibschweißen und/oder durch heißisostatisches Pressen einer mit einem Werkstoffpulver befüllten Kapsel aufgebaut wird.

11. Verfahren nach einem der Ansprüche 1 bis 10,
**dadurch gekennzeichnet, dass**
der Rotorgrundkörper und/oder der Schaufelfuß und/oder die Diffusionsbarriereschicht und/oder das Schaufelblatt vor und/oder während und/oder nach Schritt e) einzeln oder in beliebiger Kombination wärmebehandelt wird bzw. werden.

12. Beschaufelter Rotor für eine Strömungsmaschine, insbesondere für ein Flugtriebwerk, umfassend einen Rotorgrundkörper und wenigstens eine mit dem Rotorgrundkörper verbundene Schaufel, wobei die Schaufel in radialer Richtung zumindest einen mit dem Rotorgrundkörper gefügten Schaufelfuß, eine Diffusionsbarriereschicht und ein Schaufelblatt umfasst, wobei zumindest das Schaufelblatt, die Diffusionsbarriereschicht und der Rotorgrundkörper aus jeweils unterschiedlichen Werkstoffen bestehen.

13. Strömungsmaschine, insbesondere Flugtriebwerk, umfassend wenigstens einen beschaufelten Rotor, welcher durch ein Verfahren nach einem der Ansprüche 1 bis 11 erhältlich und/oder erhalten ist und/oder gemäß Anspruch 12 ausgebildet ist.
